(19) **Europäisches Patentamt / European Patent Office / Office européen des brevets**

(11) **EP 2 500 685 B2**

(12) # NEW EUROPEAN PATENT SPECIFICATION
After opposition procedure

(45) Date of publication and mention of the opposition decision:
**19.06.2019 Bulletin 2019/25**

(45) Mention of the grant of the patent:
**09.12.2015 Bulletin 2015/50**

(21) Application number: **12155695.5**

(22) Date of filing: **16.02.2012**

(51) Int Cl.:
**G01B 11/02** *(2006.01)*    **G01B 11/24** *(2006.01)*

(54) **Confocal measurement device**

Konfokale Messvorrichtung

Dispositif de mesure confocale

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.06.2011 JP 2011130230**
**14.03.2011 JP 2011055485**

(43) Date of publication of application:
**19.09.2012 Bulletin 2012/38**

(73) Proprietor: **Omron Corporation**
**Kyoto Kyoto 600-8530 (JP)**

(72) Inventors:
- **Hayakawa, Masayuki**
  **Kyoto Kyoto 600-8530 (JP)**
- **Hirata, Mariko**
  **Kyoto Kyoto 600-8530 (JP)**

(74) Representative: **Horn Kleimann Waitzhofer Patentanwälte PartG mbB**
**Ganghoferstrasse 29a**
**80339 München (DE)**

(56) References cited:
| | |
|---|---|
| **WO-A1-2006/122519** | **DE-A1-102005 006 724** |
| **DE-A1-102005 006 724** | **DE-A1-102008 020 902** |
| **DE-A1-102008 020 902** | **US-A1- 2004 051 949** |
| **US-A1- 2008 151 253** | **US-A1- 2008 151 253** |
| **US-B1- 6 674 572** | **US-B1- 6 674 572** |

- **Völklein F., Stille F.: "Entwicklung diffraktiver mikrooptischer Komponenten für optische Abstandssensoren und Systeme", Schlussbericht Projekt DI-MIKO, berichtszeitraum 01-07-2006 - 30-06-2008,**

EP 2 500 685 B2

## Description

TECHNICAL FIELD

The present invention relates to a confocal measurement device for contactlessly measuring the displacement of a measurement object, which measures the displacement of the measurement object using a confocal optical system.

RELATED ART

As a measurement device for contactlessly measuring the displacement of a measurement object, Patent Document 1 discloses a confocal measurement device that measures the displacement of a measurement object using a confocal optical system. The confocal measurement device disclosed in Patent Document 1 includes a chromatic aberration lens that introduces chromatic aberration along the optical axis into the light emitted from a light source emitting polychromatic light (such as a white light source). The confocal measurement device disclosed in Patent Document 1 changes the wavelength of light that is passed through a pinhole by varying the wavelength of the light from the chromatic aberration lens that is in focus in accordance with the displacement of the measurement object, and measures the displacement of the measurement object by measuring the wavelength of the light that has passed through the pinhole.

The confocal measurement device disclosed in Patent Document 2 uses a diffraction lens instead of a chromatic aberration lens to introduce chromatic aberration along the optical axis into the light emitted from a light source. The confocal measurement device disclosed in Patent Document 2 uses an optical fiber for the light path from the light source to a collimator lens and for the light path from the collimator lens to a spectrometer.

RELATED ART DOCUMENTS

PATENT DOCUMENTS

[Patent Document 1] US Patent 4,585,349
[Patent Document 2] US Patent 5,785,651

US Patent No. 6 674 572 A1 discloses an autofocus for a confocal microscope, realized by means of a confocal microscope arrangement comprising an illumination arrangement for illuminating an object in a raster pattern, first means for generating a first wavelength-selective splitting of the illumination light and second means for generating a second wavelength-selective splitting of the light coming from the object in a parallel manner for a plurality of points of the object, and detection means for detecting the light distribution generated by the second means, wherein an at least point-by-point spectral splitting and detection of an object image in a wavelength-selective manner is carried out and a control signal is generated from the determination of the frequency deviation and/or intensity deviation from a predetermined reference value corresponding to the object position in order to adjust the focal position by means of the vertical object position and/or the imaging system of the microscope. DE 10 2005 006724 A1 discloses a method involving a multi-wavelength source or a tunable source and imaging on a receiver by focusing systems. Chromatic depth resolution is achieved in the focusing system by a diffractive optical zone lens and a spectral analysis is carried out by a dispersive spectrometer. The interfering electromagnetic radiation is detected by a wavelength determination and the z-position of the object details determined from the spectrum such as with FFT from the knowledge of the depth resolution in the chromatic confocal system and the refractive index. An independent claim is included for an arrangement

US 2008/151253 A1 discloses an interferometric confocal method and assembly for terabyte volume optical data memories coupling two-beam spectral interferometry to chromatic confocal technology and permits a longitudinal splitting of foci in the memory volume, with the foci having limited diffraction. A spectrometer is located downstream of the interferometer with confocal discrimination in the beam path. A diffractive optical zone lens (DOZE) with a usage of the first diffraction order is introduced into the interferometric beam path to achieve longitudinal chromatic splitting. The interferometer can be a fibre-coupled interferometer with a retroreflector in the fibre-coupled reference arm and with wavelength-dependent optical path difference modification by dispersion or diffraction. The optical path difference in the interferometer is set so that easily detectable wavelets are formed from detectable interferograms by spectral analysis.

Moreover, DE 10 2008 020902 A1 discloses an arrangement having two highly-reflecting semitransparent mirrors, and a Fabry-perot- interferometer, which are attached to an object-scanning, chromatic-confocal, spectral two beam- interferometer in a path of rays that is downstream or subordinate to the interferometer (6) and the mirrors. A diffraction grating, and a fast complementary metal oxide semiconductor-line scan camera for spectrographic analysis of the electromagnetic radiation are arranged, so that microscopic illustration of an object is provided with spectral analysis of the electromagnetic radiation. An independent claim is also included for a method for chromatic-confocal, spectral two beam-interferometry.

## SUMMARY OF THE INVENTION

### PROBLEMS TO BE SOLVED BY THE INVENTION

However, the confocal measurement devices disclosed in Patent Documents 1 and 2 focus light with a chromatic aberration lens or a diffraction lens onto the measurement object, so that due to the optical characteristics of the chromatic aberration lens or diffraction lens, the depth of field changes considerably depending on the optical wavelength. When the depth of field changes considerably with the optical wavelength, then the light amount that can pass through the pinhole also depends on the optical wavelength, so that with the confocal measurement devices disclosed in Patent Documents 1 and 2, there is the problem that the precision (resolution) with which displacements of the measurement object are measured varies considerably depending on the optical wavelength.

In view of these circumstances, it is an object of the present invention to provide a confocal measurement apparatus for measuring the displacement of a measurement object using a confocal optical system, while suppressing variations, due to the optical wavelength, in the precision with which displacements of the measurement object are measured.

### MEANS FOR SOLVING THE PROBLEM

A confocal measurement device in accordance with the present invention measures a displacement of a measurement object using a confocal optical system. The confocal measurement device includes a light source that emits polychromatic light; a chromatic aberration lens that introduces chromatic aberration in an optical axis direction into the light emitted by the light source; an objective lens that is arranged closer to the measurement object than the chromatic aberration lens, and that condenses the light into which chromatic aberration has been introduced by the chromatic aberration lens onto the measurement object; a pinhole that lets the light condensed by the objective lens that is in focus on the measurement object pass; and a measurement unit that evaluates the light passed by the pinhole for a plurality of wavelengths; wherein, at the design wavelength of the chromatic aberration lens, a focus distance of the chromatic aberration lens is larger than an absolute value of a difference between a distance from the chromatic aberration lens to the objective lens and a focus distance of the objective lens.

The chromatic aberration lens is a lens that introduces chromatic aberration into light passing through it, and in particular sufficient chromatic aberration that it can be used to measure the distance of an object with a confocal measurement device with the above configuration. The chromatic aberration lens may be a diffraction lens, for example. The measurement unit may, for example, measure an intensity of the light passed by the pinhole for a plurality of wavelengths. Furthermore, it may determine the wavelength where the intensity of the light passing the pinhole is the greatest. The measurement unit may furthermore output a signal that corresponds to the result of the evaluation, or a signal that represents the displacement of the measurement object.

In the confocal measurement device according to the present invention, it is preferable that the distance from the chromatic aberration lens to the objective lens is substantially the same as the focus distance of the objective lens.

In the confocal measurement device according to the present invention, it is preferable that the objective lens is exchangeable. Moreover, it is preferable that the confocal measurement device according to the present invention further includes an optical fiber provided in a light path from the chromatic aberration lens to the measurement unit, and that the optical fiber functions as a pinhole.

Moreover, in the confocal measurement device according to the present invention, it is preferable that the chromatic aberration lens includes a glass substrate and a resin layer formed on at least one side of the glass substrate, the resin layer having a pattern that introduces chromatic aberration in the optical axis direction.

### EFFECT OF THE INVENTION

With the above-described configuration, in the confocal measurement device according to the present invention, changes in the depth of field due to the optical wavelength can be suppressed, and variations, due to the optical wavelength, in the precision with which displacements of the measurement object are measured can be suppressed by arranging the objective lens closer to the measurement object than the chromatic aberration lens and making the focus distance of the chromatic aberration lens larger than an absolute value of the difference between the distance from the chromatic aberration lens to the objective lens and the focus distance of the objective lens.

BRIEF DESCRIPTION OF THE DRAWINGS

Fig. 1 is a diagrammatic view showing the configuration of a confocal measurement device according to Embodiment 1 of the present invention.

Fig. 2 is a diagrammatic view illustrating the configuration of the confocal optical system of the head unit that is employed in a conventional confocal measurement device.

Fig. 3 is a diagram showing an example of a spectral waveform of a displacement of the measurement object measured with a conventional confocal measurement device.

Fig. 4 is a diagrammatic view showing the configuration of the confocal optical system of the head unit employed in the confocal measurement device according to Embodiment 1 of the present invention.

Fig. 5 is a diagram showing an example of a spectral waveform of a displacement of the measurement object measured with the confocal measurement device according to Embodiment 1 of the present invention.

Fig. 6 is a graph showing the change of the FWHM of the spectrum as a function of the workpiece height.

Fig. 7 is a graph showing a comparison of the numerical aperture of the diffraction lens and the numerical aperture of the objective lens.

Fig. 8 is a diagrammatic view showing the configuration of the head unit of the confocal measurement device according to Embodiment 1 of the present invention.

Fig. 9 is a diagrammatic view of a diffraction lens made of a plurality of materials.

Fig. 10 is a schematic view showing the configuration of a head unit of a confocal measurement device according to Embodiment 2 of the present invention.

Fig. 11 is a diagrammatic view showing the configuration of the spectrometer of the confocal measurement device according to Embodiment 2 of the present invention.

Fig. 12 is a diagrammatic view showing the configuration of the coupling unit coupling the white LED and the optical fiber of the confocal measurement device according to Embodiment 2 of the present invention.

Fig. 13 is a diagram showing the spectrum of the white LED of the fluorescent type.

Fig. 14 is a drawing showing the relationship between the waveform received by the imaging element and several thresholds.

Fig. 15 is a flowchart illustrating the operation of adjusting the emission intensity of the white LED.

EMBODIMENTS OF THE INVENTION

Referring to the accompanying drawings, the following is a detailed explanation of embodiments of the invention.

Embodiment 1

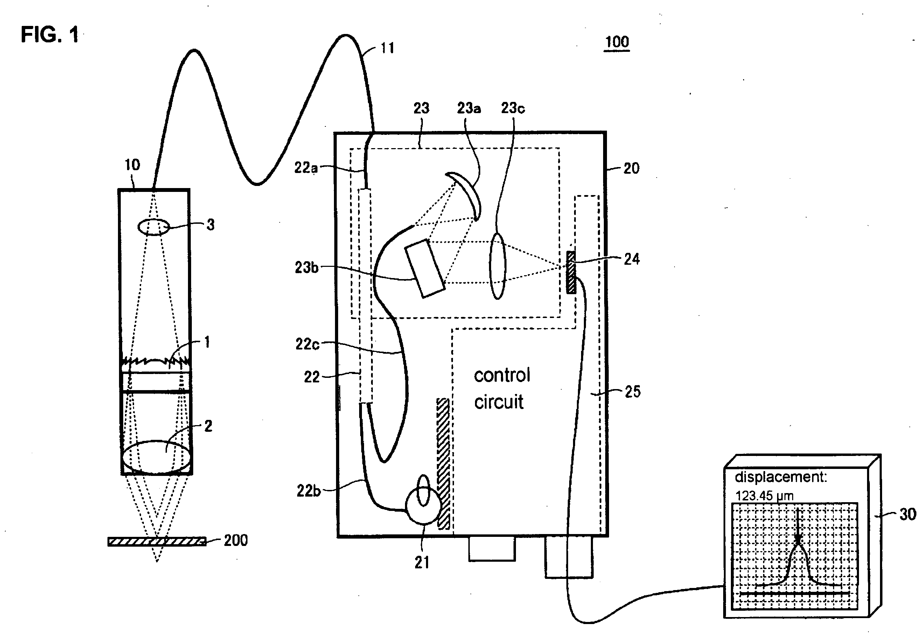

Fig. 1 is a diagrammatic view showing the configuration of a confocal measurement device according to Embodiment 1 of the present invention. The confocal measurement device 100 shown in Fig. 1 is a measurement device for measuring the displacement of a measurement object 200 using a confocal optical system. The measurement object 200 that is measured with the confocal measurement device 100 may be the cell gap of a liquid display panel, for example.

The confocal measurement device 100 includes a head unit 10 having a confocal optical system, a controller 20 that is optically connected thereto by an optical fiber 11, and a monitor 30 that displays signals that are output from the controller 20.

The head unit 10 includes a diffraction lens 1 and an objective lens 2 that is closer to the measurement object 200 than the diffraction lens 1. The focus distance of the diffraction lens 1 is larger than an absolute value of the difference between the distance from the diffraction lens to the objective lens and the focus distance of the objective lens.

Here, the diffraction lens 1 is an optical element that causes chromatic aberration along the optical axis direction in the light that is emitted from a light source emitting polychromatic light (for example, a white light source), as explained below. The diffraction lens 1 may be made by periodically forming fine protrusions, such as a kinoform shape or a binary shape (step shape), or by forming an amplitude-type zone-plate, in which the optical transmittance changes periodically, on the surface of a lens. It should be noted that the configuration of the diffraction lens 1 is not limited to the above-noted configurations.

The objective lens 2 is an optical element that focuses the light, into which chromatic aberration has been introduced by the diffraction lens 1, onto the measurement object 200. It should be noted that the following is an explanation for the case that the confocal measurement device 100 uses a white light source as the light source emitting polychromatic light.

The light emitted from the white light source is guided via the optical fiber 11 to the head unit 10. To efficiently use the light emitted from the optical fiber 11 with the diffraction lens 1, the numerical aperture (NA) of the optical fiber 11 should match the numerical aperture of the diffraction lens 1. For this reason, a collecting lens 3 is provided between the optical fiber 11 and the diffraction lens 1, and an adjustment is made to match the numerical aperture of the optical fiber 11 to the numerical aperture of the diffraction lens 1.

The optical fiber 11 is a light path from the head unit 10 to the controller 20, and functions also as a pinhole. That is to say, of the light that is condensed with the objective lens 2, only the light that is in focus at the measurement object 200 is in focus at the aperture of the optical fiber 11. For this reason, the optical fiber 11 blocks the light of wavelengths that are not in focus at the measurement object 200, and functions as a pinhole that lets only light focused on the measurement object 200 pass. By using the optical fiber 11 as the light path from the head unit 10 to the controller 20, a separate pinhole becomes unnecessary.

The confocal measurement device 100 may also have a configuration in which no optical fiber 11 is used for the light path from the head unit 10 to the controller 20, but by using the optical fiber 11 as the light path, it is possible to flexibly move the head unit 10 with respect to the controller. Moreover, if the confocal measurement device 100 has a configuration in which no optical fiber 11 is used for the light path from the head unit 10 to the controller 20, then it is necessary to provide a pinhole, but if the optical fiber 11 is used, then the confocal measurement device 100 does not need to be provided with a separate pinhole.

The controller 20 includes a white LED (Light Emitting Diode) 21 serving as the white light source, a branched optical fiber 22, a spectrometer 23, an imaging element 24, and a control circuit 25. The white LED 21 is used as the white light source, but it is also possible to use another light source, as long as it can emit white light.

The branched optical fiber 22 includes one optical fiber 22a on the side where it is connected to the optical fiber 11, and two optical fibers 22b and 22c on the opposite side. The optical fiber 22b is connected to the white LED 21 and the optical fiber 22c is connected to the spectrometer 23. For this reason, the branched optical fiber 22 can guide light emitted from the white LED 21 to the optical fiber 11 and light returning via the optical fiber 11 from the head unit 10 to the spectrometer 23.

The spectrometer 23 includes a concave mirror 23a that reflects the light returning from the head unit 10, a diffraction grating 23b on which the light reflected from the concave mirror 23a is incident, and a condensing lens 23c that condenses the light emitted from the diffraction grating 23b. The spectrometer 23 may also be of the Czerny-Turner type or of the Littrow type, as long as it can divide light returning from the head unit 10 by wavelength.

The imaging element 24 may be a line CMOS (Complementary Metal Oxide Semiconductor) or CCD (Charge Coupled Device) that measures the intensity of the light that is emitted from the spectrometer 23. Here, in this confocal measurement device 100, the spectrometer 23 and the imaging element 24 constitute a measurement unit that measures or evaluates, by wavelength, the intensity of light that returns from the head unit 10. It should be noted that as long as it can measure, by wavelength, the intensity of light that returns from the head unit 10, the measurement unit may also be simply constituted by an imaging element 24, such as a CCD. Moreover, the imaging element 24 may be a two-dimensional CMOS or a two-dimensional CCD.

The control circuit 25 is a circuit that controls the operation of the white LED 21, the imaging element 24 and the like. Moreover, although not shown in the drawings, the control circuit 25 includes an input interface into which a signal for adjusting the operation of the white LED 21, the imaging element 24 and the like is input, and an output interface from which the signal of the imaging element 24 is output.

The monitor 30 displays the signals that are output by the imaging element 24. For example, the monitor 30 may render the spectral waveform of the light returning from the head unit 10, and may display that the displacement of the measurement object is 123.45 micrometers.

Next, it is explained how with the confocal optical system of the head unit 10, variations, due to the wavelength, in the precision with which the displacement of the measurement object 200 is measured by the confocal measurement device 100 are suppressed by arranging the objective lens 2 closer to the measurement object 200 than the diffraction lens 1, and making the focus distance of the diffraction lens 1 larger than an absolute value of the difference between the distance from the diffraction lens 1 to the objective lens 2 and the focus distance of the objective lens 2.

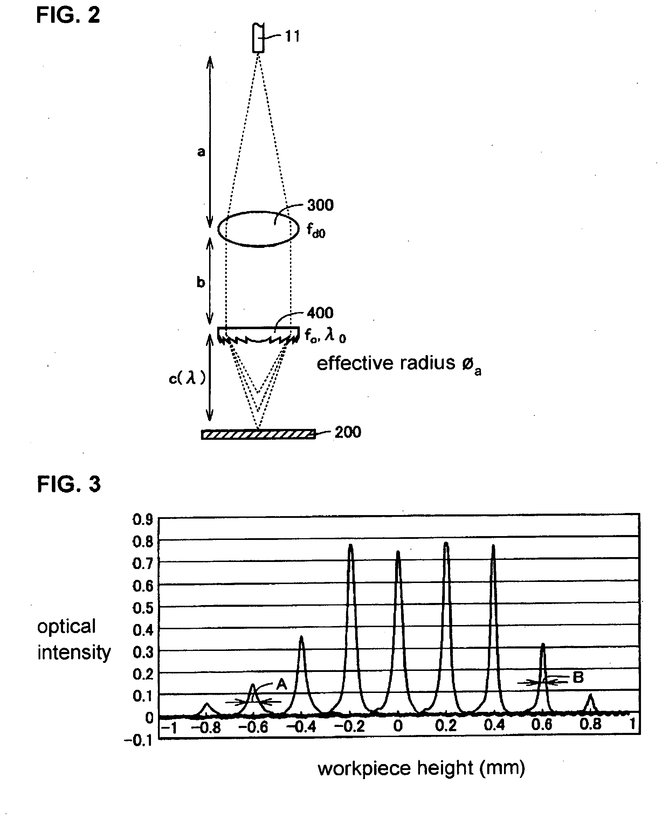

First, Fig. 2 is a diagrammatic view illustrating the configuration of the confocal optical system of the head unit that is employed in a conventional confocal measurement device. In the configuration of the confocal optical system shown in Fig. 2, the diffraction lens 400 is arranged closer to the measurement object 200 than a collimator lens 300. That is to say, in conventional confocal measurement devices, the light emitted from the end of the optical fiber 11 is turned into parallel light by the collimator lens 300, and this parallel light is condensed by the diffraction lens 400 onto the measurement object 200, causing chromatic aberration along the optical axis direction.

The conventional confocal measurement device focuses the light with the diffraction lens 400 onto the measurement object 200, so that due to the optical characteristics of the diffraction lens 400, the depth of field depends strongly on the optical wavelength. If the depth of field changes strongly with the optical wavelength, then the amount of light that can be irradiated into the optical fiber 11 (the amount of light that can pass through the pinhole) also depends on the optical wavelength, so that in the conventional confocal measurement device, the precision (resolution) with which displacements of the measurement object can be measured varies greatly with the optical wavelength.

The precision with which displacements of the measurement object can be measured can be evaluated with the full-width at half-maximum (FWHM) of the spectrum in the spectral waveform obtained with the measurement unit of the confocal measurement device. Here, the FWHM of the spectrum refers to the difference between the two points of the spectrum where the intensity of the light is 1/2 that of the peak.

Fig. 3 is a diagram showing an example of a spectral waveform of a displacement of the measurement object measured with a conventional confocal measurement device. In the spectral waveform shown in Fig. 3, the horizontal axis denotes the workpiece height, which corresponds to the optical wavelength (the height from the measurement object 200 to the front end of the head 10 is set as zero) (in mm), and the vertical axis denotes the intensity of the light (normalized value). The spectral waveform shows a plurality of peaks in the spectrum, and the FWHM of the spectrum is larger for negative workpiece heights (for shorter wavelengths of light) than for positive workpiece heights (for longer wavelengths of light). It should be noted that this FWHM also depends on the diameter of the optical fiber 11 and the depth of focus of the lens 300 on the side of the optical fiber 11. As the radius of the optical fiber 11 becomes smaller or the depth of focus of the lens 300 becomes shorter, the FWHM becomes narrower. However, since the diameter of the optical fiber 11 and the depth of focus of the lens 300 on the side of the optical fiber 11 are fixed within the measurement device, the relative difference in the FWHM due to the height of the workpiece does not change.

More specifically, the FWHM A of the spectrum at a workpiece height of about -0.6 mm is about 0.046 mm, but the FWHM B of the spectrum at a workpiece height of about 0.6 mm is about 0.023 mm. That is to say, the spectrum's FWHM A is about twice the spectrum's FWHM B, and as the workpiece height becomes smaller (the optical wavelength becomes shorter), the FWHM of the spectrum becomes larger. It should be noted that the reason why the peaks of the spectrum change with the workpiece height is that the intensity of the light included in the white light source depends on the optical wavelength.

In the conventional confocal measurement device, the FWHM of the spectrum becomes larger as the workpiece height becomes smaller (the optical wavelength becomes shorter), so that it can be seen that the precision with which the displacement of the measurement object 200 is measured becomes poorer as the workpiece height becomes smaller (the optical wavelength becomes shorter).

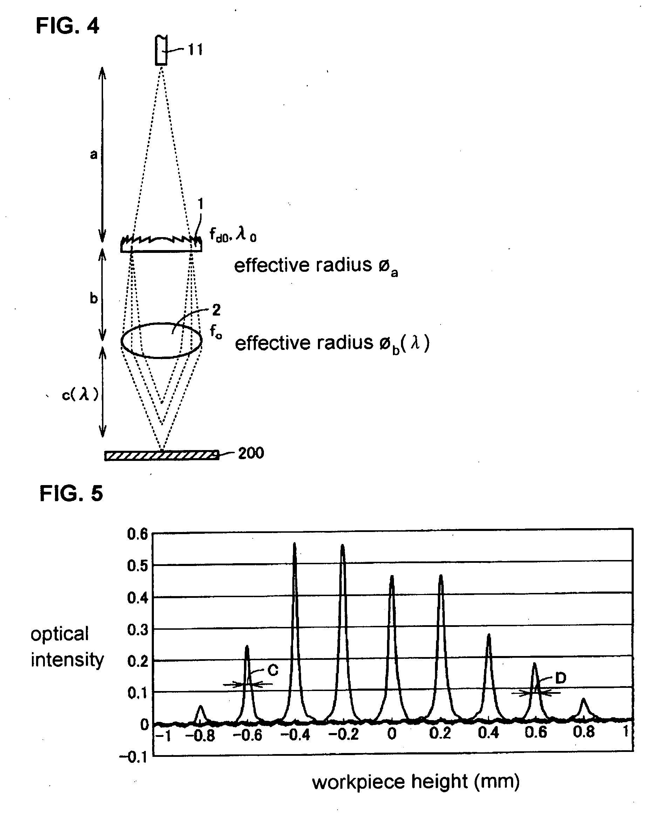

Fig. 4 is a diagrammatic view showing the configuration of the confocal optical system of the head unit 10 employed in the confocal measurement device 100 according to Embodiment 1 of the present invention. In the configuration of the confocal optical system shown in Fig. 4, the objective lens 2 is arranged closer to the measurement object 200 than the diffraction lens 1. That is to say, in the confocal measurement device 100, the diffraction lens 1 introduces chromatic aberration into the light that is emitted from the end of the optical fiber 11, and the light into which chromatic aberration has been introduced is condensed by the objective lens 2 on the measurement object 200.

In the confocal measurement device 100, the light is not condensed with the diffraction lens 1 on the measurement object 200, but is condensed with the objective lens 2 on the measurement object 200, so that for the reasons explained below, changes in the depth of field due to the optical wavelength are suppressed, thus suppressing variations in the precision with which displacements of the measurement object 200 are measured.

Fig. 5 is a diagram showing an example of a spectral waveform of a displacement of the measurement object measured with the confocal measurement device 100 according to Embodiment 1 of the present invention. In the spectral waveform shown in Fig. 5, the horizontal axis denotes the workpiece height, which corresponds to the optical wavelength (the height from the measurement object 200 to the front end of the head 10 is set as zero) (in mm), and the vertical axis denotes the intensity of the light (normalized value). The spectral waveform shows a plurality of peaks in the spectrum, and the FWHM of the spectrum for negative workpiece heights (for shorter wavelengths of light) is substantially the same as the FWHM of the spectrum for positive workpiece heights (for longer wavelengths of light).

More specifically, the FWHM C of the spectrum at a workpiece height of about -0.6 mm is about 0.025 mm, and the FWHM D of the spectrum at a workpiece height of about 0.6 mm is about 0.029 mm. That is to say, the FWHM C in the spectrum is about twice that of the FWHM D in the spectrum.

Consequently, since the FWHM of the spectrum hardly changes even when the workpiece height (optical wavelength) changes, the confocal measurement device 100 suppresses variations, due the optical wavelength, in the precision with which a displacement of the measurement object 200 is measured.

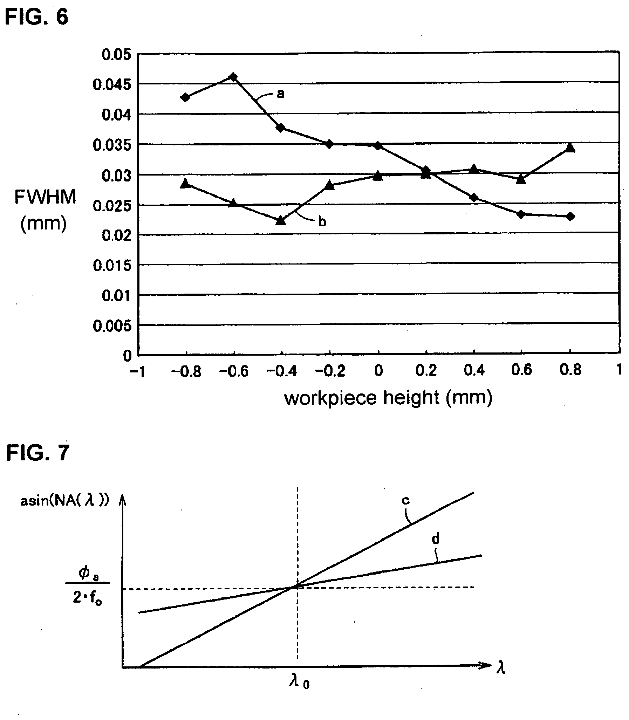

Fig. 6 is a graph showing the change of the FWHM of the spectrum as a function of the workpiece height. In the graph shown in Fig. 6, the broken line "a" shows the FWHM in the spectrum according to the conventional confocal measurement device (the FWHM in the spectrum shown in Fig. 3), and the broken line "b" shows the FWHM in the spectrum according to the confocal measurement device 100 (the FWHM in the spectrum shown in Fig. 5). According to the broken line "a", the FWHM becomes larger the smaller the workpiece height is (the shorter the optical wavelength), whereas according to the broken line "b", the FWHM is substantially constant with respect to workpiece height is (optical wavelength). More specifically, the FWHM of the spectrum shown by the broken line "a" is inclined and changes between about 0.023 mm and about 0.046 mm, whereas the FWHM of the spectrum shown by the broken line "b" changes between about 0.023 mm and about 0.034 mm, with about 0.030 mm at the center.

The following is a logical explanation, using equations, of how the confocal measurement device 100 suppresses changes in the depth of field due to the wavelength, and suppresses variations, due the optical wavelength, in the precision with which a displacement of the measurement object 200 is measured.

First, in the optical system of the confocal measurement device 100 shown in Fig. 4, "a" is the distance from the end of the optical fiber 11 to the diffraction lens 1, "b" is the distance from the diffraction lens 1 to the objective lens 2, and $c(\lambda)$ is the distance from the objective lens 2 to the point on which the light is focused by the objective lens 2. Moreover, $f_{d0}$ is the focus distance of the diffraction lens 1 for the wavelength $\lambda_0$ of light, and $\phi_a$ is the effective radius of the diffraction lens 1. It should be noted that the distance a is set to be the same as the focus distance $f_{d0}$. Also, $f_o$ is the focus distance of the objective lens 2, and $\phi_b(\lambda)$ is the effective radius of the objective lens 2.

On the other hand, in the optical system of the conventional confocal measurement device, in order to keep the calculation simple, "a" is the distance from the end of the optical fiber 11 to the collimator lens 300, "b" is the distance from the collimator lens 300 to the diffraction lens 400, and $c(\lambda)$ is the distance from the diffraction lens 400 to the point on which the light is focused by the diffraction lens 400. Moreover, $f_{d0}$ is the focus distance of the collimator lens 300. It should be noted that the distance a is set to be the same as the focus distance $f_{d0}$. Also, $f_o$ is the focus distance of the diffraction lens 400 for the wavelength $\lambda_0$ of light, and $\phi_a$ is the effective radius of the diffraction lens 400.

The focus distance $f_d(\lambda)$ of the diffraction lens 400 is a function of the optical wavelength $\lambda$, and if $f_o$ is the focus distance for the optical wavelength $\lambda_0$, then, using the formula for the diffraction lens, the focus distance $f_d(\lambda)$ can be expressed in general terms by the following Equation 1.

Equation 1

$$f_d(\lambda) = \frac{f_o \times \lambda_0}{\lambda}$$

Furthermore, using the relation stated in Equation (1) the numerical aperture $NA_1(\lambda)$ of the diffraction lens 400 can be expressed by the following Equation 2.

Equation 2

$$NA_1(\lambda) = \sin\left(\frac{\phi_a/2}{f_o \cdot \lambda_0/\lambda}\right) = \sin\left(\frac{\phi_a}{2 \cdot f_o \cdot \lambda_0} \cdot \lambda\right)$$

Next, in the optical system of the confocal measurement device 100 shown in Fig. 4, using the general lens formula, the relationship between the distance a from the end of the optical fiber 11 to the diffraction lens 1, the distance $a_g(\lambda)$ (not shown in the drawings) from the diffraction lens 1 to the point where the light emitted from the optical fiber 11 is focused by the diffraction lens 1, and the focus distance $f_d(\lambda)$ of the diffraction lens 1, and the relationship between the distance b from the diffraction lens 1 to the objective lens 2, the distance $c(\lambda)$ from the objective lens 2 to the point where the light is focused by the objective lens 2, and the focus distance $f_o$ of the objective lens 2 can be expressed by the following Equation 3. Here, chromatic aberrations due to the objective lens can be ignored.

Equation 3

$$\begin{cases} \dfrac{1}{a} + \dfrac{1}{a_g(\lambda)} = \dfrac{1}{f_d(\lambda)} \\[2ex] \dfrac{1}{(b - a_g(\lambda))} + \dfrac{1}{c(\lambda)} = \dfrac{1}{f_o} \end{cases}$$

Furthermore, using the relations of Equation 3, the effective radius $\phi_b(\lambda)$ of the objective lens 2 can be expressed by the following Equation 4:

Equation 4

$$\phi_b(\lambda) = \phi_a(1 - b/a_g(\lambda)) = \phi_a\left(1 + \frac{b}{a} - \frac{b}{f_d(\lambda)}\right)$$

Moreover, using the relation of Equation 4, the distance $c(\lambda)$ from the objective lens 2 to the point where the light is focused by the objective lens 2 can be expressed by the following Equation 5:

$$c(\lambda) = 1 / \left\{ \frac{1}{f_o} + \frac{\phi_a}{\phi_b(\lambda)} \left( \frac{1}{f_d(\lambda)} - \frac{1}{a} \right) \right\}$$

Equation 5

Furthermore, using Equations 3 to 5, the numerical aperture $NA_2(\lambda)$ of the objective lens 2 can be expressed by the following Equation 6.

$$NA_2(\lambda) = \sin\left( \frac{\phi_b}{2 \cdot c(\lambda)} \right) = \sin\left\{ \frac{\phi_a}{2 \cdot f_{d0}} \left( \left( 1 - \frac{b}{f_o} \right) \frac{\lambda}{\lambda_0} + \frac{f_{d0}}{f_o} \left( 1 + \frac{b}{a} \right) - \frac{f_{d0}}{a} \right) \right\}$$

Equation 6

If the distance a is equal to the focus distance $f_{d0}$, that is, setting $f_{d0} = a$ in Equation 6, then Equation 6 can be expressed by the following Equation 7.

$$NA_2(\lambda) = \sin\left\{ \frac{\phi_a}{2 \cdot f_{d0}} \left( \left( 1 - \frac{b}{f_o} \right) \frac{\lambda}{\lambda_0} + \frac{f_{d0}}{f_o} + \frac{b}{f_o} - 1 \right) \right\}$$

Equation 7

Here, the numerical aperture $NA_1(\lambda)$ of the diffraction lens 400, which corresponds to the objective lens in the conventional configuration, is compared to the numerical aperture $NA_2(\lambda)$ of the objective lens 2 of the present invention, while considering the condition given in Equation 8. The condition given in Equation 8 states that the focus distance $f_{d0}$ of the diffraction lens 1 for the optical wavelength $\lambda_0$ (the focus distance at the design wavelength) is larger than an absolute value of the difference between the distance b from the diffraction lens 1 to the objective lens 2 and the focus distance of the objective lens.

$$\left| \frac{1}{f_{d0}} \left( 1 - \frac{b}{f_o} \right) \right| < \frac{1}{f_0} \quad \Leftrightarrow \quad |b - f_o| < f_{d0}$$

Equation 8

Considering the condition given in Equation 8, the ratio of change with respect to the optical wavelength $\lambda$ of the numerical aperture $NA_2(\lambda)$ of the objective lens 2 (the slope in its function of the optical wavelength $\lambda$) is smaller than that of the numerical aperture $NA_1(\lambda)$ of the diffraction lens 400.

Fig. 7 is a graph showing a comparison of the numerical aperture of the diffraction lens 400 and the numerical aperture of the objective lens 2. In the graph shown in Fig. 7, the horizontal axis denotes the optical wavelength and the vertical axis denotes the inverse sine of the numerical aperture. The straight line c represents the numerical aperture $NA_1(\lambda)$ of the diffraction lens 400 and the straight line d represents the $NA_2(\lambda)$ of the objective lens 2.

Given the condition of Equation 8, it can be seen that the straight line d has a smaller slope than the straight line c. That is to say, the $NA_2(\lambda)$ of the objective lens 2 changes less with respect to the optical wavelength $\lambda$ than the numerical aperture $NA_1(\lambda)$ of the diffraction lens 400. And since the $NA_2(\lambda)$ of the objective lens 2 changes less with respect to the optical wavelength $\lambda$, the objective lens 2 can suppress changes in the depth of field with respect to the optical wavelength $\lambda$.

Note that if the distance b is equal to the focus distance $f_{d0}$ ($b = f_{d0}$), then the numerical aperture $NA_2(\lambda)$ of the objective lens 2 becomes a constant value that does not include the variable of the optical wavelength $\lambda$. That is to say, in this case, the numerical aperture $NA_2(\lambda)$ of the objective lens 2 does not change with the optical wavelength $\lambda$. Therefore, even when changing the optical wavelength $\lambda$ in the confocal measurement device 100, the light amount that can be coupled into the optical fiber 11 (the light amount that can pass through the pinhole) is constant, and the precision with which displacements of the measurement object can be measured is constant and does not depend on the wavelength.

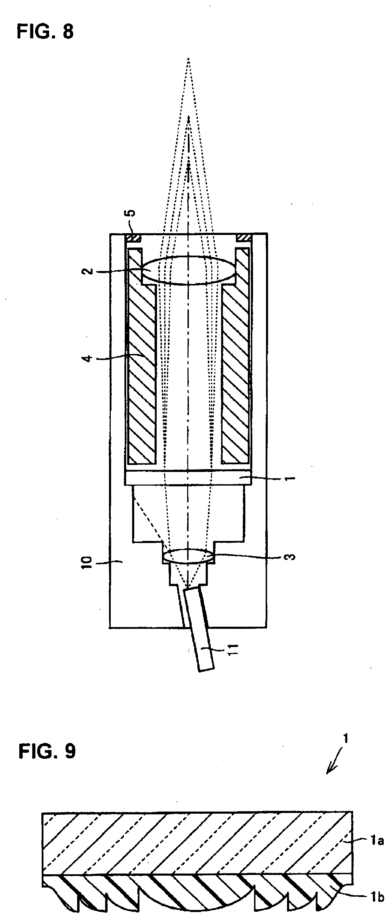

The following is a more detailed explanation of the head unit 10. Fig. 8 is a diagrammatic view showing the configuration of the head unit 10 of the confocal measurement device 100 according to Embodiment 1 of the present invention. In the head unit 10 shown in Fig. 8, the objective lens 2 is adhered to a spacer 4, and this spacer 4 is removable, so that it is possible to exchange the objective lens 2. More specifically, a ring 5 can be removed from the head unit 10, and the spacer 4 can be moved in optical axis direction to retrieve the spacer 4 from the head unit 10, and by inserting a spacer 4 to which an objective lens 2 with a different focus length is adhered, it is easy to exchange the objective lens 2 in the head unit 10. By exchanging the objective lens 2 to an objective lens 2 with a different focus length, it is possible to change the distance between the head unit 10 and the measurement object 200 and the range of the workpiece height (WD) that can be measured in the confocal measurement device 100.

Here, an ordinary optical lens is used for the objective lens 2, but it is also possible to use an achromatic lens, in which a convex lens and a concave lens that are made of two types of glass materials with different refractive indices are placed in close proximity to each other or adhered to each other. Achromatic lenses can be designed to remove chromatic aberrations, so that by using an achromatic lens as the objective lens 2, it is possible to further suppress variations, due to the optical wavelength $\lambda$, in the precision with which the confocal measurement device 100 measures displacements of the measurement object 200.

Moreover, a multimode fiber or a single-mode fiber may be used for the optical fiber 11. If a multimode fiber is used for the optical fiber 11, then the diameter of the fiber is large, so that the loss of optical power when transmitting the light emitted from the white LED 21 can be made small, and a reliable measurement with a high S/N ratio is possible even for a measurement object with lower reflectivity. If a single-mode fiber is used for the optical fiber 11, then the diameter of the fiber is several $\mu$m small, so that functioning as a pinhole, the FWHM of the received optical waveform can be made narrow as described above, and a measurement with high precision is possible. Ordinarily, if an optical fiber is used in a confocal optical system, the loss of optical power becomes large, so that also the S/N ratio often becomes problematic, and it is desirable to use a multimode fiber for the optical fiber 11.

Moreover, it is desirable to use a bendable fiber for the optical fiber 11. Often, the head unit 10 is attached to a driving portion such as an electronic component mounting apparatus or the like, and in this case, also the head unit 10 itself moves. Therefore, the optical fiber 11 connected to the head unit 10 bends right along in the movement direction of the head unit 10, so that damage can be prevented by using a bendable fiber.

Furthermore, the diffraction lens 1 is not limited to a configuration in which a pattern causing chromatic aberration in optical axis direction is formed on a substrate made of a single material, such as glass or plastic, and it may also be constituted by a plurality of materials. Fig. 9 is a diagrammatic view of a diffraction lens 1 made of a plurality of materials. The diffraction lens 1 shown in Fig. 9 includes a glass substrate 1a, and a resin layer 1b with a pattern that causes chromatic aberration in optical axis direction, formed on one side of the glass substrate 1a.

The resin layer 1b can be made by applying a UV-curing resin to the glass substrate 1a, pressing a die of the desired pattern against the side of the glass substrate 1a to which the UV-curing resin has been applied, and curing the UV-curing resin by irradiation of UV light.

The manufacturing costs of a diffraction lens 1 made only of glass are quite high, since it is made by processing hard glass to form a pattern that causes chromatic aberrations in the optical axis direction. However, in a diffraction lens 1 made of a glass substrate 1a and a resin layer 1b, the resin layer 1b is processed with a die of the desired pattern to form the pattern that causes chromatic aberrations in the optical axis direction, so that its manufacturing costs are lower.

Moreover, the shape of a diffraction lens 1 that is made only of resin changes considerably with the ambient temperature, and it has poor temperature characteristics. However, in the diffraction lens 1 made of a glass substrate 1a and a resin layer 1b, the glass substrate 1a, whose shape changes hardly with the ambient temperature, accounts for most of the configuration, so that its temperature characteristics are good.

It should be noted that in the diffraction lens 1 shown in Fig. 9, there is no limitation to forming the resin layer 1b on one side of the glass substrate 1a, and it is also possible to form the resin layer 1b on both sides of the glass substrate 1a.

As explained above, in the confocal measurement device 100 according to the present invention, changes in the depth of field due to the optical wavelength can be suppressed, and variations, due to the optical wavelength, in the precision with which displacements of the measurement object 200 are measured can be suppressed by arranging the objective lens 2 closer to the measurement object 200 than the diffraction lens 1 and making the focus distance of the diffraction lens 1 larger than an absolute value of the difference between the distance from the diffraction lens 1 to the objective lens 2 and the focus distance of the objective lens 2.

Embodiment 2

In the following explanations, the coupling of the optical fiber 22b with the head unit 10, the spectrometer 23 and the white LED 21 constituting the confocal measurement device 100 shown in Fig. 1 is replaced by a coupling between the optical fiber and the head unit, the spectrometer and the white LED having a different configuration.

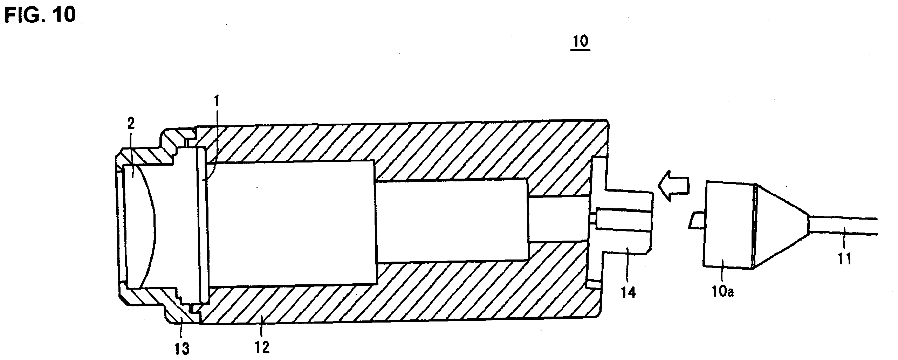

Fig. 10 is a schematic view showing the configuration of a head unit of a confocal measurement device 100 according to Embodiment 2 of the present invention. The head unit 10a shown in Fig. 10 includes a main unit 12 including a diffraction lens 1, and an objective lens unit 13 having an objective lens 2. Objective lens units 13 with different objective lenses 2 depending on the object to be measured may be prepared, and these objective lens units 13 can be fitted to the main unit 12, so that they can be easily exchanged. The main unit 12 and the objective lens unit 13 can be fitted together by any method, such as screwing them together or coupling them together, as long the main unit 12 and the objective lens unit 13 can be fastened together.

The main unit 12 is provided with a fiber receptacle 14 for connecting the optical fiber 11. It should be noted that the optical fiber 11 is provided with an optical connector 15 that can be fitted to the fiber receptacle 14 at the end that is to be connected to the main unit 12. By fitting the fiber receptacle 14 to the optical connector 15 together, the main unit 12 can be connected detachably to the optical fiber 11. And by making the main unit 12 and the optical fiber 11 detachable from each other, it is sufficient to exchange the optical fiber 11 without exchanging the entire head unit 10a if the optical fiber 11 is damaged at the location where the confocal measurement device 100 is set up, so that the running costs of the confocal measurement device 100 can be decreased. Moreover, since the optical fiber 11 is merely replaced, there is also no need to readjust the optical axis of the head unit 10a, and it is possible to resume the measurement immediately after replacing the optical fiber 11.

For the optical fiber 11, an APC (Angled PC) polished fiber is used in which the face at the end (end face) on the side connected to the main unit 12 is cut obliquely with respect to the optical axis. Therefore, the reflection light from the end face of the optical fiber 11 can be reduced, the offset to the received waveform due to the reflection light can be reduced and a narrowing of the measurement range can be suppressed. It should be noted that if an APC polished optical fiber 11 is used, the emission direction of the light becomes oblique with respect to the optical axis of the optical fiber 11, so that it is necessary to place the central axis of the fiber receptacle 14 obliquely with respect to the central axis of the main unit 12 such that the emission direction of the light is aligned with central axis of the main unit 12.

Moreover, the head unit 10a shown in Fig. 10 has a small shape, so that the distance between the diffraction lens 1 and the objective lens 2 is smaller than the focus distance of the objective lens 2. Furthermore, the head unit 10a shown in Fig. 10 does not employ the condensing lens 3 shown in Fig. 8. For this reason, the head unit 10a shown in Fig. 10 has a poorer light utilization efficiency than the head unit 10 shown in Fig. 8, but since the number of lenses is reduced, it is also possible to reduce the costs of the lenses and the number of man-hours required to adjust the lenses.

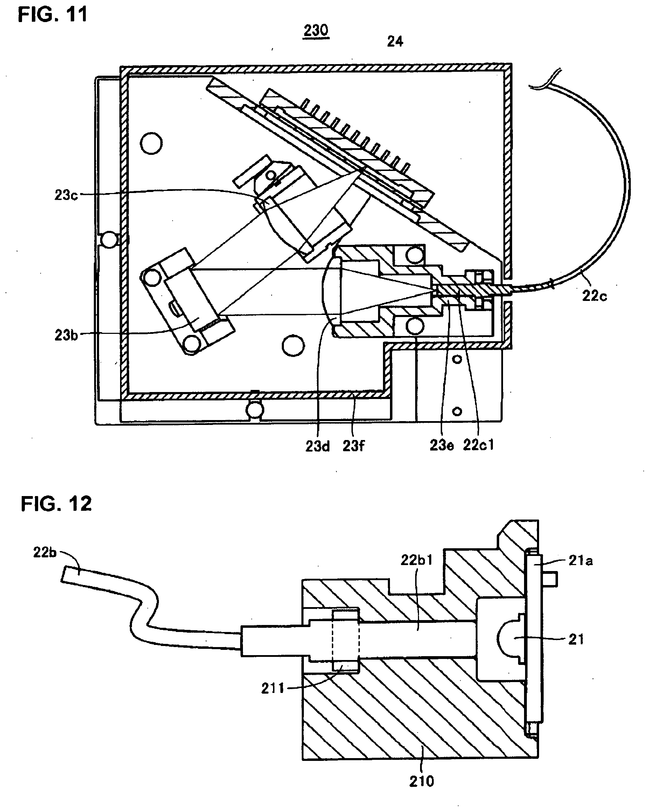

Fig. 11 is a diagrammatic view showing the configuration of the spectrometer of the confocal measurement device 100 according to Embodiment 2 of the present invention. The spectrometer 230 shown in Fig. 11, which is of the Czerny-Turner type, includes a diffraction grating 23b, a condensing lens 23c, and a collimator lens 23d. It should be noted that constituent elements of the spectrometer 230 in Fig. 11 that are the same as those of the spectrometer 23 shown in Fig. 1 have been assigned the same reference numerals.

The light returning from the head unit 10 via the optical fiber 22c is irradiated into the spectrometer 230. The light emitted from the optical fiber 22c is collimated by a collimator lens 23d, and after being reflected by a diffraction grating 23b, it is condensed by a condensing lens 23c and irradiated onto a CCD serving as the imaging element 24.

A fiber ferrule 22c1 is provided at the end of the optical fiber 22c, and this fiber ferrule 22c1 is fixed to a fiber receptacle 23e. The diffraction grating 23b, the condensing lens 23c, the collimator lens 23d, the fiber receptacle 23e and the imaging element 24 are fixed to a spectrometer base 23f such that their positions cannot be easily shifted.

In order to collimate the light that is incident from the optical fiber 22c, the spectrometer 230 uses a collimator lens 23d that is a simple lens instead of a reflecting mirror, so that the costs can be reduced.

Fig. 12 is a diagrammatic view showing the configuration of the coupling unit coupling the white LED and the optical fiber of the confocal measurement device 100 according to Embodiment 2 of the present invention. The coupling unit coupling the white LED 21 and the optical fiber 22b shown in Fig. 12 includes a retaining case 210 and a fiber holder 211. A substrate 21a on which the white LED 21 is mounted is fixed with screws or the like to the retaining case 210. The retaining case 210 is made of metal, such as an aluminum alloy or the like and easily dissipates the heat that is generated when the white LED 21 is on via the substrate 21a. It should be noted that in order to keep down the amount of heat generated, it is preferable that the white LED 21 blinks in pulses, but to suppress noise, it is preferable that the white LED 21 is continuously on.

In the retaining case 210, the coupling unit coupling the white LED 21 and the optical fiber 22b is configured by inserting a fiber ferrule 22b1 of the optical fiber 22b into a recess that is provided on the optical axis of the white LED 21 and fixing the optical fiber 22b with the fiber holder 211. The fiber ferrule 22b1 of the optical fiber 22b is a metal or ceramic component to protect the tip of the fiber, and the diameter of its tip is about 50 $\mu$m.

Note that the distance between the white LED 21 and the tip of the fiber ferrule 22b1 should be as short as possible, in order to increase the utilization efficiency of the light. However, considering manufacturing variability, it is necessary to leave a distance between the white LED 21 and the tip of the fiber ferrule 22b1 that corresponds to the dimensional tolerances of the white LED 21, the fiber ferrule 22b1 and the like.

The following is a more detailed explanation of the white LED 21 that is used in the confocal measurement device 100 according to Embodiment 2. For the white LED 21, an LED of the fluorescent type is used. Fluorescent white LEDs have a structure in which a chip of an LED emitting blue light or light of an even shorter wavelength is covered by a fluorescent material, and white light is obtained by obtaining the light emitted from the chip and the excitation light of the fluorescent material due to that light.

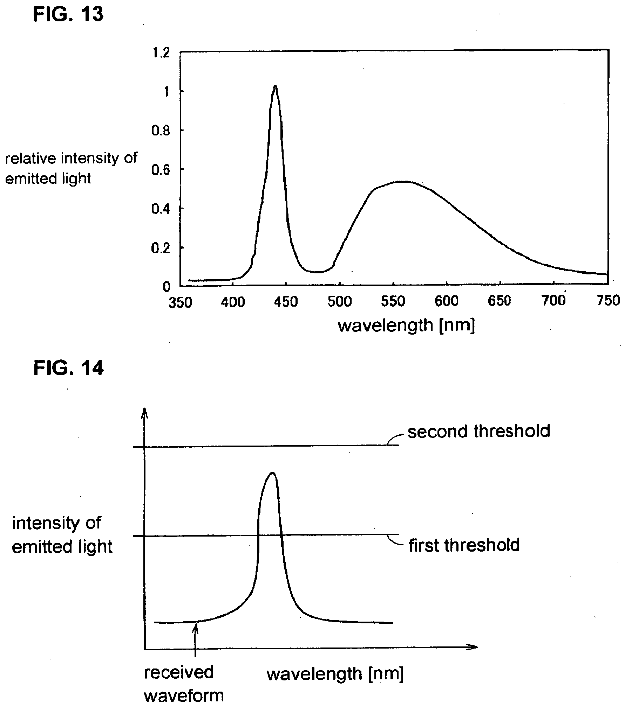

Fig. 13 is a diagram showing the spectrum of the white LED 21 of the fluorescent type. The spectrum shown in Fig. 13 contains two components, namely components having a large intensity in the blue range (near the wavelength of 440 nm) and components whose intensity changes smoothly over the wavelengths from 500 nm to 700 nm. The components of the spectrum that have a large intensity are the components of light that is emitted from the chip and the components of the spectrum whose intensity changes smoothly are the components of the excitation light of the fluorescent substance.

Here, in the confocal measurement device 100 according to Embodiment 2 of the present invention, a light source having an intensity distribution that is nearly uniform over the wavelength axis is ideal, so that it is preferable to use the components of the spectrum whose intensity changes smoothly. The wavelengths at which an intensity of at least half that of the peak (at a wavelength of 560 nm) of the components of the spectrum whose intensity changes smoothly is attained are taken as the measurement range (the wavelengths of 520 - 650 nm) of the confocal measurement device 100.

Next, the emission intensity of the white LED 21 is adjusted in order to obtain stable measurement results with the confocal measurement device 100 according to Embodiment 2 of the present invention. That is to say, if the emission intensity of the white LED 21 of the confocal measurement device 100 is too large, then the waveform received by the imaging element 24 saturates, so that the correct peak cannot be obtained, and conversely, if the emission intensity of the white LED 21 is too small, then the waveform received by the imaging element 24 is buried in noise, so that the correct peak cannot be obtained.

Moreover, as noted above, the emission intensity in the spectrum of the white LED 21 changes with the wavelength and is not constant. For this reason, it is necessary to adjust the intensity of the light emitted by the white LED 21 in order to obtain a stable measurement result.

Fig. 14 is a drawing showing the relationship between the waveform received by the imaging element 24 and several thresholds. In order to obtain a stable measurement result, the emission intensity of the white LED 21 is adjusted such that the peak of the waveform received by the imaging element 24 lies between a first threshold and a second threshold.

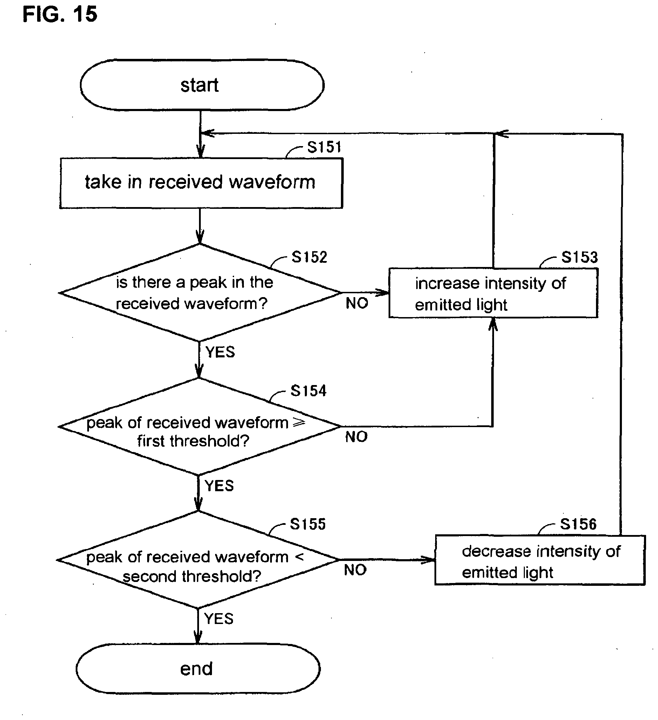

Fig. 15 is a flowchart illustrating the operation of adjusting the emission intensity of the white LED 21. First, the imaging element 24 takes in the received waveform as shown in Fig. 14 (Step S151). Next, the control circuit 25 shown in Fig. 1 judges whether the received waveform obtained with the imaging element 24 contains a peak (Step S152). If the control circuit 25 judges that no peak is contained in the received waveform obtained with the imaging element 24 (Step S152: NO), then the ON current is increased or the emission pulse width is widened, increasing the emission intensity of the white LED 21 (Step S153).

If the control circuit 25 judges that a peak is contained in the received waveform obtained with the imaging element 24 (Step S152: YES), then it judges whether the peak of the received waveform is at least as large as the first threshold value as shown in Fig. 14 (Step S154). If the control circuit 25 judges that the peak of the received waveform is not at least as large as the first threshold value (that is, smaller than the first threshold value) (Step S154: NO), then the procedure advances to Step S153, and the ON current is increased or the emission pulse width is widened, increasing the emission intensity of the white LED 21.

If the control circuit 25 judges that the peak of the received waveform is at least as large as the first threshold value (Step S154: YES), then it judges whether the peak of the received waveform is smaller than the second threshold value as shown in Fig. 14 (Step S155). If the control circuit 25 judges that the peak of the received waveform is not smaller than the second threshold value (at least the second threshold value) (Step S155: NO), then the ON current is reduced or the emission pulse width is narrowed, reducing the emission intensity of the white LED 21 (Step S156).

If the control circuit 25 judges that the peak of the received waveform is smaller than the second threshold value (Step S155: YES), then the processing is ended.

As described above, by adjusting the emission intensity of the white LED 21 as shown by the flowchart in Fig. 15 a stable measurement result can be obtained with the confocal measurement device 100 according to Embodiment 2 of the present invention, even if the peak of the received waveform changes with the wavelength of the white LED 21 or the peak of the received waveform changes with the reflectivity of the measurement object.

Note that the flowchart shown in Fig. 15 was explained for the case that the emission intensity of the white LED 21 is adjusted by adjusting the ON current of the white LED 21 or adjusting the emitted pulse width, but it is also possible to adjust the peak of the received waveform such that a stable measurement result is obtained by changing the gain or the imaging time of the imaging element 24.

The embodiments disclosed herein are meant to be in all respects illustrative rather than limiting. The scope

# EP 2 500 685 B2

of the present invention is not limited by the above explanations, but is as defined in the appended claims, and is intended to cover all equivalents as well as modifications within the scope of the claims.

INDEX TO THE REFERENCE NUMERALS

| 1, 400 | diffraction lens |
| 2 | objective lens |
| 3, 23c | condensing lens |
| 4 | spacer |
| 5 | ring |
| 10, 10a | head unit |
| 11, 22a, 22b, 22c | optical fiber |
| 12 | main unit |
| 13 | objective lens unit |
| 14, 23e | fiber receptacle |
| 15 | optical connector |
| 20 | controller |
| 21 | white LED |
| 22 | branched optical fiber |
| 22b1, 22c1 | fiber ferrule |
| 23, 230 | spectrometer |
| 23a | concave mirror |
| 23b | diffraction grating |
| 23d | collimator lens |
| 23f | spectrometer base |
| 24 | imaging element |
| 25 | control circuit |
| 30 | monitor |
| 100 | confocal measurement device |
| 200 | measurement object |
| 210 | holding case |
| 211 | fiber holder |
| 300 | collimator lens |

**Claims**

1.  A confocal measurement device (100) for measuring a displacement of a measurement object (200) using a confocal optical system, the confocal measurement device (100) comprising:

    a light source (21) that emits polychromatic light;
    a chromatic aberration lens (1) that introduces chromatic aberration in an optical axis direction into the light emitted by the light source (21);
    an objective lens (2) that is arranged closer to the measurement object (200) than the chromatic aberration lens (1), and that condenses the light into which chromatic aberration has been introduced by the chromatic aberration lens (1) onto the measurement object (200);
    a pinhole that lets the light condensed by the objective lens (2) that is in focus on the measurement object (200) pass; and
    a measurement unit (23, 24) that evaluates the light passed by the pinhole for a plurality of wavelengths;
    wherein, at a design wavelength of the chromatic aberration lens (1), a focus distance of the chromatic aberration lens (1) is larger than an absolute value of a difference between a distance from the chromatic aberration lens (1) to the objective lens (2) and a focus distance of the objective lens (2).

2.  The confocal measurement device (100) according to claim 1,
    wherein the distance from the chromatic aberration lens (1) to the objective lens (2) is substantially the same as the focus distance of the objective lens (2).

3. The confocal measurement device (100) according to claim 1 or 2,
wherein the objective lens (2) is exchangeable.

4. The confocal measurement device (100) according to any of claims 1 to 3,
further comprising an optical fiber provided (11, 22a, 22b, 22c) in a light path from the chromatic aberration lens (1) to the measurement unit (23, 24);
wherein the optical fiber (11, 22a, 22b, 22c) functions as a pinhole.

5. The confocal measurement device (100) according to any of claims 1 to 4,
wherein the chromatic aberration lens (1) includes a glass substrate and a resin layer formed on at least one side of the glass substrate, the resin layer having a pattern that introduces chromatic aberration in the optical axis direction.

**Patentansprüche**

1. Konfokale Messvorrichtung (100) zum Messen einer Verschiebung eines Messobjekts (200) unter Verwendung eines konfokalen optischen Systems, wobei die konfokale Messvorrichtung (100) aufweist:

eine Lichtquelle (21), welche polychromatisches Licht emittiert;
eine chromatische Aberrationslinse (100), welche eine chromatische Aberration in einer Richtung einer optischen Achse in das Licht einbringt, das durch die Lichtquelle (21) emittiert wird;
eine Objektivlinse (2), welche näher an dem Messobjekt (200) als an der chromatischen Aberrationslinse (1) angeordnet ist und welche das Licht, in welches die chromatische Aberration durch die chromatische Aberrationslinse (1) eingebracht ist, auf das Messobjekt (200) verdichtet;
eine Lochblende, die das durch die Objektivlinse (2) verdichtete Licht hindurchlässt, das in einem Fokus auf dem Messobjekt (200) ist; und
eine Messeinheit (23, 24), die das Licht für eine Vielzahl von Wellenlängen auswertet, das durch die Lochblende hindurchgegangen ist,
**dadurch gekennzeichnet, dass**
bei einer Planwellenlänge der chromatischen Aberrationslinse (1) ein Fokusabstand der chromatischen Aberrationslinse (1) größer als ein Absolutwert einer Differenz zwischen einem Abstand von der chromatischen Aberrationslinse (1) zu der Objektivlinse (2) und ein Fokusabstand der Objektivlinse (2) ist.

2. Konfokale Messvorrichtung (1) gemäß Anspruch 1,
wobei der Abstand von der chromatischen Aberrationslinse (1) zu der Objektivlinse (2) im Wesentlichen der gleiche wie der Fokusabstand der Objektivlinse (2) ist.

3. Konfokale Messvorrichtung (100) gemäß Anspruch 1 oder 2,
wobei die Objektivlinse (2) austauschbar ist.

4. Konfokale Messvorrichtung (100) gemäß einem der Ansprüche 1 bis 3, welche ferner eine optische Faser (11, 22a, 22b, 22c) aufweist, die in einem Lichtpfad von der chromatischen Aberrationslinse (1) zu der Messeinheit (23, 24) vorgesehen ist;
wobei die optische Faser (11, 22a, 22b, 22c) als eine Lochblende fungiert.

5. Konfokale Messvorrichtung (100) gemäß einem der Ansprüche 1 bis 4,
wobei die chromatische Aberrationslinse (1) ein Glassubstrat und eine Kunststoffschicht umfasst, die auf zumindest einer Seite des Glassubstrats gebildet ist, wobei die Kunststoffschicht ein Muster aufweist, das eine chromatische Aberration in der Richtung der optischen Achse einbringt.

**Revendications**

1. Dispositif de mesure confocale (100) destiné à mesurer un déplacement d'un objet de mesure (200) par utilisation d'un système optique confocal, le dispositif de mesure confocale (100) comprenant :

une source lumineuse (21) qui émet une lumière polychromatique ;
une lentille à aberration chromatique (1) qui introduit une aberration chromatique dans la direction d'un axe optique, dans la lumière émise par la source lumineuse (21) ;

une lentille d'objectif (2) qui est disposée plus près de l'objet de mesure (200) que la lentille à aberration chromatique (1) et qui condense la lumière dans laquelle une aberration chromatique a été introduite par la lentille à aberration chromatique (1), sur l'objet de mesure (200) ;

un sténopé qui laisse passer la lumière condensée par la lentille d'objectif (2) qui est focalisée sur l'objet de mesure (200) ; et

une unité de mesure (23, 24) qui évalue la lumière que laisse passer le sténopé pour une pluralité de longueurs d'ondes ;

**caractérisé en ce que** :

à une longueur d'onde théorique de la lentille à aberration chromatique (1), une distance focale de la lentille à aberration chromatique (1) est supérieure à une valeur absolue d'une différence entre une distance de la lentille à aberration chromatique (1) à la lentille d'objectif (2) et une distance focale de la lentille d'objectif (2).

2. Dispositif de mesure confocale (100) selon la revendication 1,
dans lequel la distance de la lentille à aberration chromatique (1) à la lentille d'objectif (2) est sensiblement identique à la distance focale de la lentille d'objectif (2).

3. Dispositif de mesure confocale (100) selon la revendication 1 ou 2,
dans lequel la lentille d'objectif (2) est échangeable.

4. Dispositif de mesure confocale (100) selon l'une quelconque des revendications 1 à 3,
comprenant en outre une fibre optique (11, 22a, 22b, 22c) placée dans un trajet de lumière de la lentille à aberration chromatique (1) à l'unité de mesure (23, 24).
dans lequel la fibre optique (11, 22a, 22b, 22c) fonctionne comme un sténopé.

5. Dispositif de mesure confocale (100) selon l'une quelconque des revendications 1 à 4,
dans lequel la lentille à aberration chromatique (1) comprend un substrat en verre et une couche de résine formée sur au moins un côté du substrat en verre, la couche de résine présentant un motif qui introduit une aberration chromatique dans la direction de l'axe optique.

FIG. 1

**FIG. 2**

effective radius $\emptyset_a$

**FIG. 3**

workpiece height (mm)

## FIG. 4

effective radius $\varnothing_a$

effective radius $\varnothing_b(\lambda)$

## FIG. 5

workpiece height (mm)

**FIG. 6**

**FIG. 7**

**FIG. 8**

**FIG. 9**

**FIG. 10**

EP 2 500 685 B2

**FIG. 11**

**FIG. 12**

## FIG. 13

relative intensity of
emitted light

wavelength [nm]

## FIG. 14

intensity of
emitted light

second threshold

first threshold

received
waveform

wavelength [nm]

## FIG. 15

```
                    ┌─────────────────┐
                    │      start      │
                    └─────────────────┘
                             │                                    ┌──────────────────┐
                             │◄────────────────────────┐◄─────────┤                  │
                             ▼        ┌─S151            │          │                  │
                    ┌─────────────────────────┐        │          │                  │
                    │ take in received waveform│       │          │                  │
                    └─────────────────────────┘        │          │                  │
                             │                          │          │                  │
                             ▼        ┌─S152            │          ┌─S153            │
                        ╱─────────────╲                 │   ┌──────────────────┐     │
                      ╱ is there a peak ╲      NO        └───│ increase intensity│    │
                      ╲ in the received ╱─────────────────►│ of emitted light  │     │
                        ╲  waveform?  ╱                     └──────────────────┘     │
                             │                                        ▲               │
                            YES                                       │               │
                             ▼        ┌─S154                          │               │
                        ╱─────────────╲                               │               │
                      ╱ peak of received╲    NO                       │               │
                      ╲ waveform ≥ first ╱───────────────────────────┘               │
                        ╲ threshold?  ╱                                               │
                             │                                                        │
                            YES                                                       │
                             ▼        ┌─S155                    ┌─S156               │
                        ╱─────────────╲                ┌──────────────────┐          │
                      ╱ peak of received╲    NO         │ decrease intensity│          │
                      ╲ waveform < second╱─────────────►│ of emitted light  │─────────┘
                        ╲ threshold?  ╱                 └──────────────────┘
                             │
                            YES
                             ▼
                    ┌─────────────────┐
                    │       end       │
                    └─────────────────┘
```

**EP 2 500 685 B2**

## REFERENCES CITED IN THE DESCRIPTION

**Patent documents cited in the description**

- US 4585349 A
- US 5785651 A
- US 6674572 A1
- DE 102005006724 A1
- US 2008151253 A1
- DE 102008020902 A1